# NEUE EUROPÄISCHE PATENTSCHRIFT

(11) **EP 0 363 722 B2**
(45) Veröffentlichungstag und Bekanntmachung des Hinweises auf die Entscheidung über den Einspruch: **30.10.1996**
(45) Hinweis auf die Patenterteilung: 09.06.1993
(21) Anmeldenummer: 89117722.2
(22) Anmeldetag: 26.09.1989
(51) Int. Cl.: B65H 3/32, B65G 59/02, B65G 61/00

(54) **Verfahren und Vorrichtung zum Entstapeln von blockweise auf Paletten gestapelten Zuschnitten**
Method and device for unpiling sheets piled in block-form on pallets
Méthode et dispositif pour le désempilage de feuilles empilées en blocs sur des palettes

(30) Priorität: 14.10.1988 DE 3835032
(43) Veröffentlichungstag der Anmeldung: 18.04.1990
(73) Patentinhaber: Niepmann Traylift Transportsysteme GmbH & Co. KG, D-58285 Gevelsberg (DE)
(72) Erfinder: Brinker, Alfred, Dr., D-5820 Gevelsberg (DE); Kwauka, Gerd-Georg, Dr., D-4830 Gütersloh (DE)
(74) Vertreter: Stenger, Watzke & Ring Patentanwälte

(56) Entgegenhaltungen:
- EP-A- 0 071 864
- EP-A- 0 173 613
- EP-A- 0 354 873
- WO-A-86/07579
- DE-A- 2 306 691
- DE-C- 3 718 601
- FR-A- 2 563 197
- GB-A- 2 205 300
- US-A- 4 671 723

## Beschreibung

Die Erfindung betrifft ein Verfahren zum Entstapeln von blockweise auf Paletten gestapelten Zuschnitten aus Papier, Pappe, Karton, Kunststoff oder dgl.

Die Erfindung betrifft ferner eine Vorrichtung zum Entstapeln von blockweise auf Paletten gestapelten Zuschnitten aus Papier, Pappe, Karton, Kunststoff oder dgl., die anschließend als Zuschnittsblock einer Weiterverarbeitung oder Zwischenlagerung zugeführt werden, mit einem räumlich gesteuert verfahrbaren Greifkopf, an dem ein etwa waagerecht ausgerichtetes Einstechwerkzeug gelagert ist.

An vielen Verpackungsmaschinen, insbesondere an Zigarettenpackmaschinen und Faltschachtelklebemaschinen, werden Papier- oder Kartonzuschnitte in großen Mengen verarbeitet. Derartige Maschinen werden immer leistungsfähiger, so daß häufig Leistungssteigerungen nur noch dann sinnvoll sind, wenn auch das Problem der Beschickung dieser Maschinen mit Zuschnittstapeln zufriedenstellend gelöst werden kann. Zu diesem Zweck sollen die Zuschnittstapel den Maschinen auf Paletten angeliefert werden.

Es sind Verfahren und Vorrichtungen bekannt, bei denen die zu verarbeitenden Zuschnitte der jeweiligen Maschine in Stapeln zugeführt werden. Hierbei ist es jedoch erforderlich, spezielle Kassetten, Boxen oder ähnliche Hilfseinrichtungen für die einzelnen Zuschnittstapel zu verwenden oder diese in besonderer Weise stapelweise zu umreifen, damit sie der jeweiligen Maschine ordnungsgemäß zugeführt werden können. Weiterhin sind spezielle Zwischenlagen für die auf einer Palette gestapelten Zuschnitte bekannt, wobei diese Spezialzwischenlagen mit Aussparungen versehen sind, durch die ein Greifer hindurchgreifen kann, um die einzelnen Zuschnittstapel zu entnehmen.

Diese speziellen Hilfsmittel oder zusätzlichen Maßnahmen stellen für den jeweiligen Kunden unzumutbare Einschränkungen dar, die nicht nur den Aufwand vergrößern und damit die Kosten erhöhen, sondern auch die Leistungsfähigkeit der Maschinen einschränken. Aus diesem Grunde sind Versuche unternommen worden, die auf einer Palette gestapelten Zuschnitte von oben schuppenförmig über Friktionselemente zu entnehmen. Diese Versuche haben jedoch nicht zu einem brauchbaren Ergebnis geführt. weil die Funktion derartiger Maßnahmen wegen der Gefahr des Verhakelns der Zuschnitte untereinander nicht einwandfrei gewährleistet werden kann.

Aus der WO-A- 86 07579, die dem Oberbegriff der Ansprüche 1 und 9 entspricht, ist ein Verfahren zum Entstapeln von blockweise auf Paletten gestapelten Zuschnitten, beispielsweise aus Papier oder Karton, bekannt, bei dem die Zuschnitte anschließend als Zuschnittsblock einer Weiterverarbeitung zugeführt werden. Zum Anheben der Zuschnittsblocks ist ein heb- und senkbares sowie um eine vertikale Achse drehbares Werkzeug vorgesehen, welches aus einer um die vertikale Achse drehbaren, vertikalen Tragachse sowie einem an deren unterem Ende befestigten Einstechwerkzeug besteht. Das Einstechwerkzeug besteht aus einer Mehrzahl in Horizontalführungen des Tragarmes gelagerter Stäbe, die entlang ihrer Längsersteckung jeweils von einer flexiblen Hülle umgeben sind, die daher eine geschlossene Schlaufe um die Stäbe herum bildet, und die mit beiden Enden an dem Tragarm befestigt ist. Bei einem horizontalen Verschieben der Stäbe mittels einer an dem Werkzeug angeordneten Hydraulik folgt daher die Belegung der Hülle der Bewegung des jeweils eingeschlossenen Stabes. Auf diese Weise kann das Einstechwerkzeug unter einen Stapel eingeführt oder unter diesem herausgezogen werden, ohne daß Reibungskräfte zwischen Einstechwerkzeug und Stapel auftreten. Nachteilig bei dem bekannten Verfahren sowie dar hierbei verwendeten Vorrichtung ist, daß keine Maßnahmen vorgesehen sind, um zunächst die Position des Einstechwerkzeuges relativ zur Lage des jeweils handzuhabenden Stapels festzustellen.

In der FR-A 2 563 197 ist ein Verfahren offenbart, um mittels horizontal verfahrbarar Einstechwerkzeuge Stapel flacher Gegenstände horizontal zu separieren. Hierzu sind die vertikal verfahrbaren Einstechwerkzeuge entlang horizontaler Führungen verfahrbar ausgebildet.

In der nach Art. 54(3) EPÜ zum Stand der Technik gehörenden EP 0 354 873 ist bereits beschrieben ein Verfahren zum Entstapeln von blockweise auf Paletten gestapelten Zuschnitten aus Papier, Pappe, Karton, Kunststoff oder dgl., die anschließend als Zuschnittsblock einer Weiterverarbeitung oder Zwischenlagerung zugeführt werden, wobei Reihen mit Zuschnittsblocks nacheinander mittels eines Einstechwerkzeuges von ihrer jeweiligen Unterlage mindestens geringfügig angehoben werden und anschließend der jeweilige Zuschnittsblock abtransportiert wird, wobei sich die in einer waagerechten Ebene mindestens grob positionierte Spitze des Einstechwerkzeuges unmittelbar vor dem Einstechvorgang zwecks exakter Positionierung in senkrechter Richtung auf einer gegenüber der senkrechten Einstechseite des Zuschnittsblocks vorstehenden Unterlage abstützt, die durch eine die übereinanderliegenden Zuschnittsblocks (Z) voneinander trennende Zwischenlage (U) gebildet wird, bevor das Einstechwerkzeug eingefahren wird.

Der Erfindung liegt die **Aufgabe** zugrunde, ein Verfahren sowie eine Vorrichtung der eingangs beschriebenen Art so weiterzuentwickeln, daß blockweise auf Paletten gestapelte Zuschnitte, wie beispielsweise Zigarettenpackungszuschnitte und Faltschachtelzuschnitte beliebiger Art, als einzelne Zuschnittsblocks entnommen werden können, ohne daß teure Spezialgeräte verwendet werden müssen, um zunächst die Position des Einstechwerkzeuges relativ zur Lage des jeweiligen Stapels auf der Palette festzustellen.

Zur **Lösung** dieser Aufgabenstellung wird ein Verfahren mit den in Anspruch 1 angegebenen Merkmalen vorgeschlagen.

Als Unterlage für die blockweise auf den Paletten gestapelten Zuschnitte können normale Zwischenlagen aus Papier, Pappe oder Kunststoff verwendet werden.

Gemäß einem weiterentwickelten Verfahren wird ein am Außenrand des Gesamtstapels auf der Palette angeordneter Zuschnittsblock durch Saugkraft gegenüber der Zwischenlage separiert und anschließend ein Einstechwerkzeug unter den jeweils untersten Zuschnitt des jeweiligen Zuschnittsblocks eingefahren, durch das anschließend der jeweilige Zuschnittsblock abgehoben und abtransportiert wird.

Alternativ kann ein am Außenrand des Gesamtstapels auf der Palette angeordneter Zuschnittsblock auch durch von oben durch Lücken entweder des Zuschnittsblocks oder zwischen benachbarten Zuschnittsblöcken eingeführte Einstechfinger gegenüber der Zwischenlage verschoben werden, bevor anschließend ein Einstechwerkzeug unter den jeweils untersten Zuschnitt des jeweiligen Zuschnittsblocks eingefahren wird, durch das anschließend der jeweilige Zuschnittsblock abgehoben und abtransportiert wird.

Um ein Verrutschen des jeweils zu entnehmenden Zuschnittsblockes beim Einschieben des Einstechwerkzeuges zu verhindern, wird gemäß einem weiterbildenden Merkmal der Erfindung vorgeschlagen, vor dem Einstechvorgang den jeweiligen Zuschnittsblock durch Aufbringen einer Druckkraft in einem von der Einstechseite entfernten Bereich gegen ein Verschieben durch das Einstechwerkzeug zu belasten.

Gemäß einem weiteren Merkmal der Erfindung erfolgt die exakte Positionierung des Einstechwerkzeuges in senkrechter Richtung durch Auflage der Spitze des Einstechwerkzeuges auf der jeweiligen Zwischenlage und durch eine hierdurch erzeugte geringfügige Relativbewegung der Spitze gegenüber der senkrechten Anstellbewegung des gesamten Einstechwerkzeuges. Die die senkrechte Anstellbewegung des Einstechwerkzeuges beendende Auflagekraft der Spitze des Einstechwerkzeuges auf der jeweiligen Unterlage ist hierbei erfindungsgemäß in Abhängigkeit von der Beschaffenheit der Unterlage und/oder von der Lage des jeweils zu entnehmenden Zuschnittsblocks auf der Palette veränderlich.

Bei einer bevorzugten Ausführungsform der erfindungsgemäßen Verfahren erfolgt der Abtransport des jeweiligen Zuschnittsblocks durch das Einstechwerkzeug, wobei während dieses Abtransports der Zuschnittsblock durch eine Haltekraft gegen Verrutschen auf dem Einstechwerkzeug gesichert wird.

Erfindungsgemäß werden die einzelnen Zuschnittblöcke vom Einsteckwerkzeug auf einem als Zwischenspeicher ausgebildeten Förderband abgelegt, so daß sich einerseits kurze Transportwege zwischen Einsteckwerkzeug und Ablage ergeben und andererseits bei einem Palettenwechsel kein Stillstand der nachgeschalteten Maschine erforderlich wird.

Zur Lösung der Aufgabenstellung wird mit der Erfindung ferner eine Vorrichtung vorgeschlagen, bei der das Einstechwerkzeug um eine waagerechte Achse geringfügig verschwenkbar gelagert ist, wobei die Verschwenkbewegung des Einstechwerkzeuges in Absenkrichtung durch einen Anschlag begrenzt ist und die Verschwenkbewegung des Einstechwerkzeuges in Gegenrichtung durch einen Schalthebel überwacht wird, der mittels eines Schalters die Absenkbewegung des Greifkopfes unterbricht, sobald das Einstechwerkzeug entgegen einer einstellbaren Federkraft um einen vorgebbaren Winkel verschwenkt worden ist.

Diese erfindungsgemäße Ausbildung der Entstapelungsvorrichtung ermöglicht mit geringem technischen Aufwand ein funktionssicheres Entstapeln von blockweise auf Paletten gestapelten Zuschnitten, ohne daß hierfür spezielle Zwischenlagen oder Stapelbehälter verwendet werden müssen.

Gemäß einem weiteren Merkmal der Erfindung ist die auf das Einstechwerkzeug entgegengesetzt zur Absenkrichtung ausgeübte Federkraft mittels eines Verstellgliedes, beispielsweise eines Hubmagneten oder Druckmittelzylinders verstellbar. Auf diese Weise kann die erfindungsgemäße Entstapelungsvorrichtung mit einfachen Mitteln nicht nur an die jeweiligen Gegebenheiten der auf der Palette befindlichen Zuschnittsblocks und Unterlagen angepaßt werden; es besteht auch die Möglichkeit, die Federkraft entsprechend der jeweiligen Lage des aktuell zu entnehmenden Zuschnittsblocks anzupassen, beispielsweise in Abhängigkeit von der Stabilität der Unterlage an der jeweiligen Entnahmestelle.

Gemäß einem weiteren Merkmal der Erfindung ist am Greifkopf außerhalb des Bewegungsbereiches des Einstechwerkzeuges ein verfahrbarer Druckstempel angeordnet. Mit diesem Druckstempel wird auf den jeweils zu entnehmenden Zuschnittsblock eine Druckkraft aufgebracht, die dessen Verschieben durch das Einstechwerkzeug verhindert.

Sofern das Einstechwerkzeug zugleich dazu verwendet wird, den entnommenen Zuschnittsblock zur Zwischenlagerung oder Weiterverarbeitung abzutransportieren, wird gemäß einem weiteren Merkmal der Erfindung am Greifkopf innerhalb des Bewegungsbereiches des Einstechwerkzeuges ein verfahrbarer Haltestempel angeordnet, der den jeweiligen Zuschnittsblock gegen ein Verrutschen auf dem Einstechwerkzeug sichert.

Bei einer bevorzugten Ausbildung der erfindungsgemäßen Vorrichtung ist das Einstechwerkzeug an einer Tragplatte angeordnet, die in waagerechter Richtung verfahrbar am Greifkopf gelagert ist. Je nach Ausbildung der zu verarbeitenden Zuschnitte ist das Einstechwerkzeug entweder als zungenartige Platte mit einer mittigen Spitze oder als gegabelte Platte mit zwei Spitzen ausgebildet. Vorzugsweise sind die Spitzen hierbei gegenüber der waagerechten Platte leicht nach unten gebogen und jeweils mit einer definierten Auflagefläche ausgebildet, so daß ein zuverlässiges Unterfahren des untersten Zuschnitts des jeweiligen Zuschnittsblocks ohne die Gefahr einer Beschädigung der Unterlage gewährleistet ist.

Um einen am Außenrand des Gesamtstapels auf der Palette angeordneten Zuschnittsblock durch Saugkraft gegenüber seiner Unterlage separieren, d.h. vorziehen oder abheben zu können, ist bei einer Ausführungsform der Erfindung am Greifkopf seitlich neben dem Einstechwerkzeug mindestens ein Sauger angeordnet. Zusätzlich zum Sauger bzw. anstelle des Saugers können am Greifkopf seitlich neben dem Einstechwerkzeug weiterhin Einstechfinger angeordnet sein, die relativ zum Einstechwerkzeug in senkrechter Richtung verfahrbar sind, um insbesondere am Außenrand des Gesamtstapels auf der Palette angeordnete Zuschnittsblocks auf der Unterlage zu verschieben, indem diese Einstechfinger von oben her in Lücken eingeführt werden, die entweder durch entsprechende Formgebung des Zuschnittes im Zuschnittsblock ausgebildet sind oder sich zwischen benachbarten Zuschnittsblocks ergeben.

Mit der Erfindung wird schließlich vorgeschlagen, das Einstechwerkzeug mit mindestens einem, an seiner Vorderseite mündenden Druckluftkanal zu versehen; die aus diesem Druckluftkanal austretende Druckluft erleichtert des Einführen des Einstechwerkzeuges zwischen dem untersten Zuschnitt des jeweiligen Zuschnittsblockes und seiner Unterlage und verhindert hierbei Beschädigungen.

Auf der Zeichnung sind verschiedene Ausführungsbeispiele der erfindungsgemäßen Vorrichtung dargestellt, und zwar zeigen:
- Fig. 1: eine perspektivische Darstellung einer Palette mit blockweise gestapelten Zuschnitten sowie einer schematischen Darstellung einer Entstapelungsvorrichtung,
- Fig. 2: eine detailliertere Darstellung einer ersten Ausführungsform des Greifkopfes der Entstapelungsvorrichtung, ebenfalls in einer perspektivischen Ansicht,
- Fig. 3: eine Seitenansicht des am Greifkopf der Fig.2 angeordneten Einstechwerkzeuges,
- Fig. 4: eine Draufsicht auf den vorderen Teil dieses Einstechwerkzeuges gemäß der Blickrichtung IV in Fig.3,
- Fig. 5: eine Seitenansicht zu Fig.4 und
- Fig. 6: einen Querschnitt gemäß der Schnittlinie VI - VI in Fig.5,
- Fig. 7: eine perspektivische Darstellung einer abgewandelten Ausführungsform des Einstechwerkzeuges,
- Fig. 8: eine perspektivische Darstellung einer zweiten Ausführungsform eines Greifkopfes einer Entstapelungsvorrichtung und
- Fig. 9: eine weitere Alternative eines Greifkopfes der Entstapelungsvorrichtung in perspektivischer Darstellung.

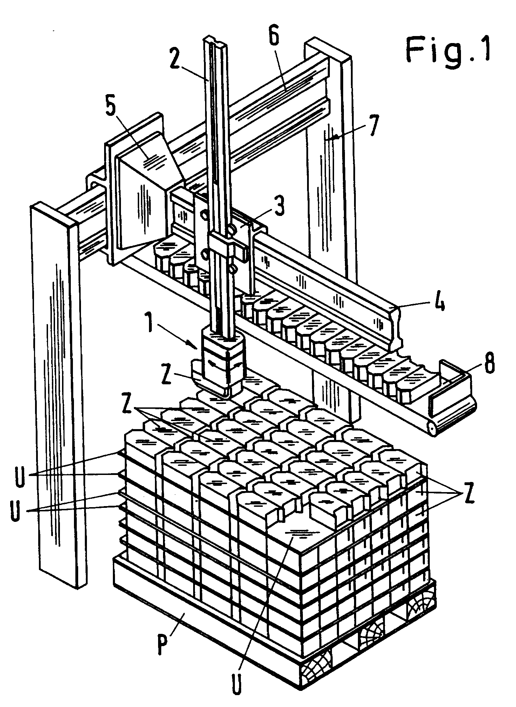

Die Gesamtübersicht in Fig. 1 zeigt eine Palette P, auf der eine Vielzahl von Zuschnittsblocks Z gestapelt ist. Jeder Zuschnittsblock Z besteht aus einer bestimmten Anzahl von Zuschnitten, beispielsweise von Zuschnitten für Zigarettenpackungen oder Faltschachteln. Zwischen jeder Lage der Zuschnittsblocks Z ist eine Unterlage U in Form einer Zwischenlage aus Papier oder Pappe angeordnet, durch welche die übereinanderliegenden Zuschnittsblocks Z voneinander getrennt werden.

Bei der in Fig. 1 dargestellten Ausführung bilden somit die Zwischenlagen die jeweilige Unterlage U für die einzelnen Zuschnittsblocks Z.

Zum Entstapeln der auf der Palette P blockweise gestapelten Zuschnittsblocks Z wird ein Greifkopf 1 verwendet, der in Fig.1 nur schematisch dargestellt ist. Dieser Greifkopf 1 ist beim Ausführungsbeispiel nach Fig.1 am unteren Ende einer Führungsstange 2 verdrehbar angeordnet, wie durch den eingezeichneten Doppelpfeil angedeutet ist. Die Führungsstange 2 ist in senkrechter Richtung verfahrbar an einem Lautwagen 3 angeordnet, der seinerseits an einem waagerechten Tragbalken 4 verfahrbar ist. Dieser Tragbalken 4 ist wiederum an einem Schlitten 5 angeordnet, der am waagerecht verlaufenden Joch 6 eines Portals 7 verfahrbar ist. Auf diese Weise ist durch Verfahren des Schlittens 5 sowie des Laufwagens 3 eine Positionierung des Greifkopfes 1 in waagerechter Richtung möglich, die beispielsweise mit Hilfe von Fotozellen erfolgt und damit eine Steuerung unabhängig von der jeweiligen Zuschnittsgröße ermöglicht. Die Höhenverstellung erfolgt durch ein Verschieben der Führungsstange 2 am Laufwagen 3. Schließlich kann eine Ausrichtung des Greifkopfes 1 durch Verdrehen gegenüber der Führungsstange 2 vorgenommen werden.

In Fig.1 ist angedeutet, daß ein mit Hilfe des Greifkopfes 1 von der Palette P entnommener Zuschnittsblock Z nach dem Abheben einem Förderband 8 zugeführt wird, das innerhalb des Portals 7 verläuft und die einzelnen Zuschnittsblocks Z entweder einer unmittelbaren Weiterverarbeitung, beispielsweise einer Zigarettenpackmaschine oder einer Faltschachtelklebemaschine, oder einer Zwischenlagerung zuführt. Selbstverständlich sind auch andere Arten des Abtransports der blockweise von der Palette P entnommenen Zuschnitte möglich.

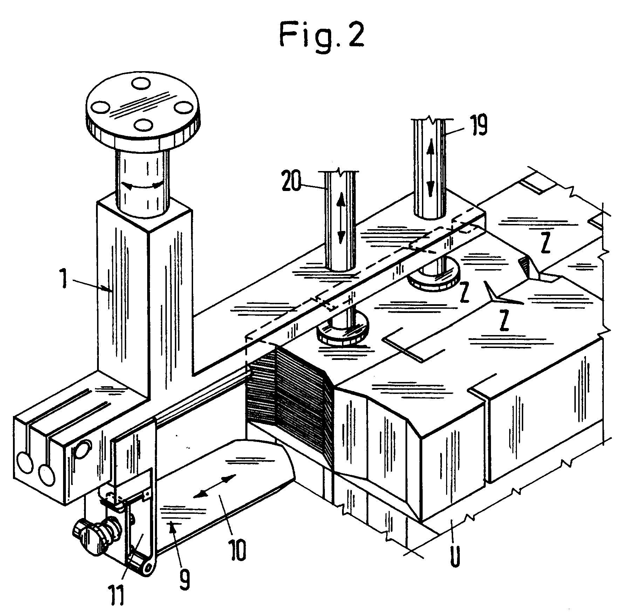

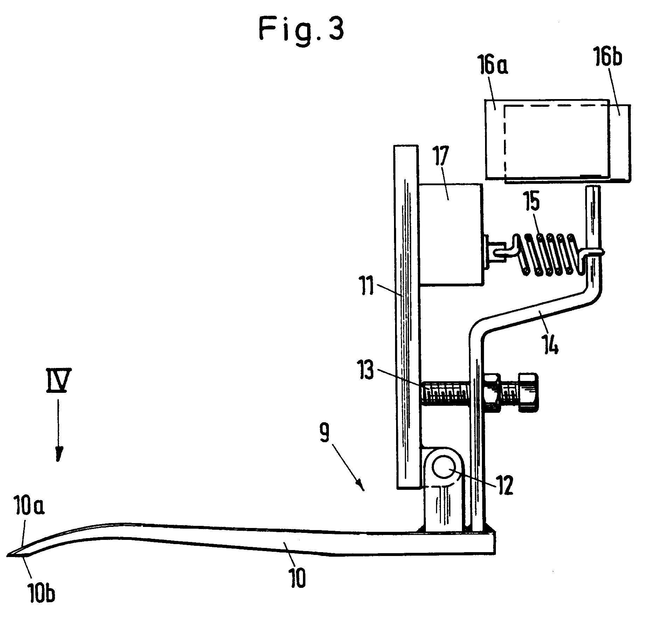

Ein erstes Ausführungsbeispiel des Greifkopfes 1 ist in den Figuren 2 bis 6 dargestellt. Die Fig.2 zeigt in perspektivischer Darstellung den räumlich gesteuert verfahrbaren Greifkopf 1, an dem ein etwa waagerecht ausgerichtetes Einstechwerkzeug 9 angeordnet ist, das im einzelnen in den Figuren 3 bis 6 dargestellt ist.

Bei diesem Ausführungsbeispiel wird das Einstechwerkzeug 9 durch eine zungenartige Platte 10 mit mittiger Spitze 10a gebildet. Diese Spitze 10a ist gegenüber der waagerecht verlaufenden Platte 10 leicht nach unten gebogen und mit einer definierten Auflagefläche 10b ausgebildet, so daß das Einstechwerkzeug 9 gezielt auf eine Unterlage U aufgelegt werden kann, bevor die Platte 10 durch waagerechtes Verfahren relativ zum Greifkopf 1 unter den jeweils zu entnehmenden Zuschnittsblock Z eingefahren werden kann.

Bei dem in Fig.3 dargestellten Ausführungsbeispiel ist die zungenartige Platte 10 an einer Tragplatte 11 angeordnet, die in waagerechter Richtung verfahrbar am Greifkopf 1 gelagert ist, wie insbesondere aus Fig.2 hervorgeht. Die Platte 10 ist um einen Lagerbolzen 12, der eine waagerechte Achse bildet, relativ zur Tragplatte 11 geringfügig verschwenkbar. Die Verschwenkbewegung ist in Absenkrichtung der Platte, d.h. gemäß Fig.3 in Gegenuhrzeigerrichtung, durch einen Anschlag begrenzt, der durch eine an der Tragplatte 11 anliegende Schraube 13 gebildet wird. Diese Schraube 13 ist in einem Schalthebel 14 angeordnet, der an der Oberseite der Platte 10 befestigt ist und sich etwa rechtwinklig nach oben erstreckt. An dem Schalthebel 14 greift weiterhin eine Zugfeder 15 an, welche die Schraube 13 gegen die Tragplatte 11 zieht und damit die Platte 10 in der waagerechten, gegebenenfalls leicht nach unten geneigten Normalstellung hält. Nur wenn die Spitze 10a der Platte 10 mit ihrer Auflagefläche 10b auf eine Unterlage U aufgelegt wird, erfolgt eine geringfügige Verschwenkung der Platte 10 (gemäß Fig.3 im Uhrzeigersinn) entgegen der Kraft der Zugfeder 15. Diese Verschwenkbewegung wird durch Näherungsschalter 16a,16b überwacht, wobei der Näherungsschalter 16a dazu dient, die Absenkbewegung des Greifkopfes 1 zu beenden, sobald er frei geworden ist, und der Näherungsschalter 16b dazu verwendet wird, eine geringfügige Rückbewegung einzuleiten, falls die Zwischenstellung zwischen den beiden Näherungsschaltern 16a,16b überfahren worden ist.

Um die Größe der Auflagekraft, die zu einer Verschwenkung der Platte 10 und damit zum Abschalten der senkrechten Absenkbewegung des Greifkopfes 1 führt, verändern zu können, kann gemäß Fig.3 ein Ende der Zugfeder 15 an einem Verstellglied, beispielsweise einem Hubmagnet 17 angeordnet sein, durch dessen Betätigung die Vorspannkraft der Zugfeder 15 veränderlich ist.

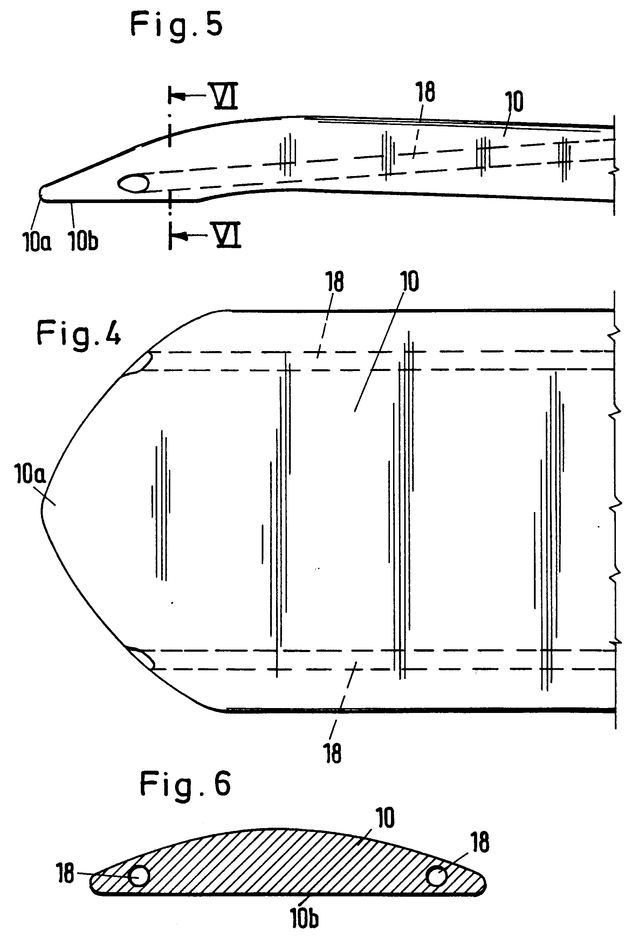

Um das Eindringen der Spitze 10a der zungenartigen Platte 10 zwischen die Unterlage U und den jeweils unteren Zuschnitt des Zuschnittsblocks Z zu erleichtern, kann gemäß den Figuren 4 bis 6 die Platte 10 mit einem oder mehreren Druckluftkanälen 18 versehen sein, die an der Vorderseite der Platte 10 münden und durch die ausströmende Druckluft den Einstechvorgang der Platte 10 erleichtern.

Anhand der Figuren 1 und 2 soll nunmehr ein Entstapelungsvorgang erläutert werden, und zwar anhand von Zuschnitten für Zigarettenhartpackungen.

Die auf der Palette P gestapelten Zuschnittsblocks Z werden nacheinander mittels des Einstechwerkzeuges 9 von ihrer jeweiligen Unterlage U abgehoben, wozu zuerst der Greifkopf 1 durch Verfahren des Laufwagens 3 und des Schlittens 5 in einer waagerechten Ebene oberhalb der Palette P mindestens grob derart positioniert wird, daß sich die Spitze 10a der Platte 10 des Einstechwerkzeuges 9 seitlich oberhalb des zu entnehmenden Zuschnittsblocks Z befindet. Hierbei muß darauf geachtet werden, daß die Spitze 10a der Platte 10 bei einer anschließenden Absenkbewegung des Greifkopfes 1 auf die Unterlage U gelangt, die gegenüber der senkrechten Einstechseite des zu entnehmenden Zuschnittsblocks Z übersteht, wie dies insbesondere die Fig. 2 zeigt. Dieser Überstand der Unterlage U gegenüber der frei zugänglichen Seite der Zuschnittsblocks Z ergibt sich beispielsweise durch die entsprechende Formgestaltung der Zuschnitte. Da der etwa trapezförmige Überstand der Unterlage U sich an seinen Rändern am darunter befindlichen Zuschnittsblock Z abstützt, genügen bereits dünne, beispielsweise aus Papier bestehende Zwischenlagen, um die entsprechende Unterlage U zu bilden.

Durch die Auflage der Spitze 10a des Einstechwerkzeuges 9 auf der Unterlage U ergibt sich ein Signal für eine exakte Positionierung der Platte 10 in senkrechter Richtung, wobei die senkrechte Absenkbewegung des Greifkopfes 1 beendet wird, sobald die mit der Auflagefläche 10b auf der Unterlage U aufliegende Platte 10 die Kraft der Zugfeder 15 überwunden und eine vorgebbare Verschwenkbewegung ausgeführt hat, so daß der Näherungsschalter 16a durch Freiwerden anspricht. In dieser definierten Stellung wird nunmehr die das Einstechwerkzeug 9 tragende Tragplatte 11 durch waagerechte Relativbewegung gegenüber dem Greifkopf 1 zwischen der Unterlage U und dem untersten Zuschnitt des Zuschnittsblockes Z eingefahren, so daß der Zuschnittsblock Z auf der Platte 10 zu liegen kommt. Dieser Zuschnittsblock Z kann anschließend mittels des Einstechwerkzeuges 9 von der Unterlage U abgehoben und abtransportiert werden, beispielsweise indem er gemäß Fig.1 dem Förderband 8 zugeführt wird.

Um beim Einschieben des Einstechwerkzeuges 9 ein Verrutschen des Zuschnittsblockes Z zu verhindern, ist beim dargestellten Ausführungsbeispiel am Greifkopf 1 außerhalb des Bewegungsbereiches des Einstechwerkzeuges 9 ein verfahrbarer Druckstempel 19 angeordnet. Dieser Druckstempel 19 hält den jeweiligen Zuschnittsstapel Z fest auf der Unterlage, während das Einstechwerkzeug in Form der Platte 10 eingefahren wird. Um dieses Einfahren nicht zu behindern, befindet sich der Druckstempel 19 außerhalb des Bewegungsbereiches der Platte 10.

Damit beim anschließenden Abheben des Zuschnittsblockes Z dieser sicher auf der Platte 10 gehalten wird, befindet sich am Greifkopf 1 weiterhin ein Haltestempel 20, der allerdings innerhalb des Bewegungsbereiches der Platte 10 liegt, so daß er nach dem Einstechvorgang den jeweiligen Zuschnittsblock Z sicher zwischen Platte 10 und Haltestempel 20 festhält.

Durch eine entsprechende Bewegung der Führungsstange 2 relativ zum Laufwagen 3, des Laufwagens 3 am Tragbalken 4 und des Schlittens 5 am Joch 6 erfolgt anschließend eine Überführung des von der Palette P abgehobenen Zuschnittsblockes Z auf das Förderband 8. Auch hier kann der Druckstempel 19 ausgefahren werden, um den jeweiligen Zuschnittsblock Z auf dem Förderband 8 festzuhalten, wenn die Platte 10 durch Relativbewegung ihrer Tragplatte 11 gegenüber dem Greifkopf 1 unter dem Zuschnittsblock Z zurückgezogen wird, wobei selbstverständlich zuvor der Haltestempel 20 von der Oberseite des Zuschnittsblocks Z abgehoben worden ist. Auch hierbei wird die Absatzbewegung sinnvollerweise durch Auslenkung der Platte 10 gegenüber der Tragplatte 11 aufgrund von Signalen der Näherungsschalter 16a und 16b unterbrochen.

Wesentlich bei dem voranstehend beschriebenen Entstapelungsverfahren ist es, daß die in der waagerechten Ebene mindestens grob positionierte Spitze 10a des die Platte 10 umfassenden Einstechwerkzeuges 9 unmittelbar vor dem Einstechvorgang zwecks exakter Positionierung in senkrechter Richtung auf der gegenüber der senkrechten Einstechseite des Zuschnittsblocks Z vorstehenden Unterlage U abgestützt wird, bevor das Einstechwerkzeug 9 eingefahren wird. Durch diese Abstützung ergibt sich auf einfache Weise eine exakte Positionierung in senkrechter Richtung, wobei die Auflagekraft der Spitze 10a auf der Unterlage U nur gering ist. Da die Auflagekraft durch ein geringfügiges Absenken des Einstechwerkzeuges 9 gegenüber der Unterlage U erzeugt wird und zu einer geringfügigen Relativbewegung der Spitze 10a gegenüber der senkrechten Anstellbewegung des gesamten Einstechwerkzeuges 9 führt, kann diese Schwenkbewegung ausgenutzt werden, um das senkrechte Absenken des gesamten Greifkopfes 1 zu beenden, beispielsweise mit Hilfe der in Fig.3 dargestellten Konstruktion.

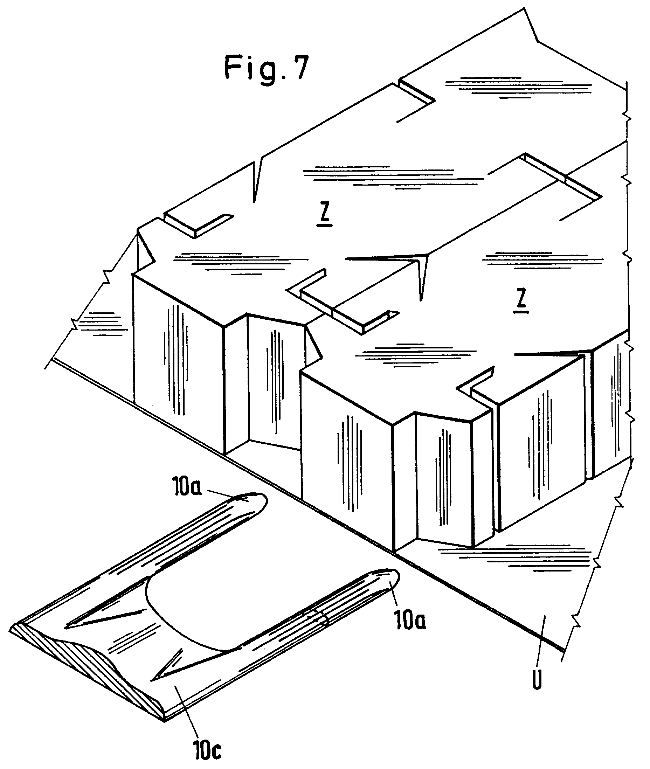

Die Fig.7 zeigt eine abgeänderte Ausführung des eigentlichen Einstechwerkzeuges 9, das bei diesem Beispiel als gegabelte Platte 10c ausgeführt ist, die zwei Spitzen 10a besitzt. Mit diesen beiden Spitzen 10a stützt sich die Platte 10c seitlich neben einem vorspringenden Teil der Zuschnittsblocks Z auf der Unterlage U ab. Hiermit wird angedeutet, daß die eigentliche Ausbildung des Einstechwerkzeuges 9 ohne weiteres auf die jeweilige Form der Zuschnitte abgestimmt werden kann, ohne am Gesamtkonzept etwas zu ändern.

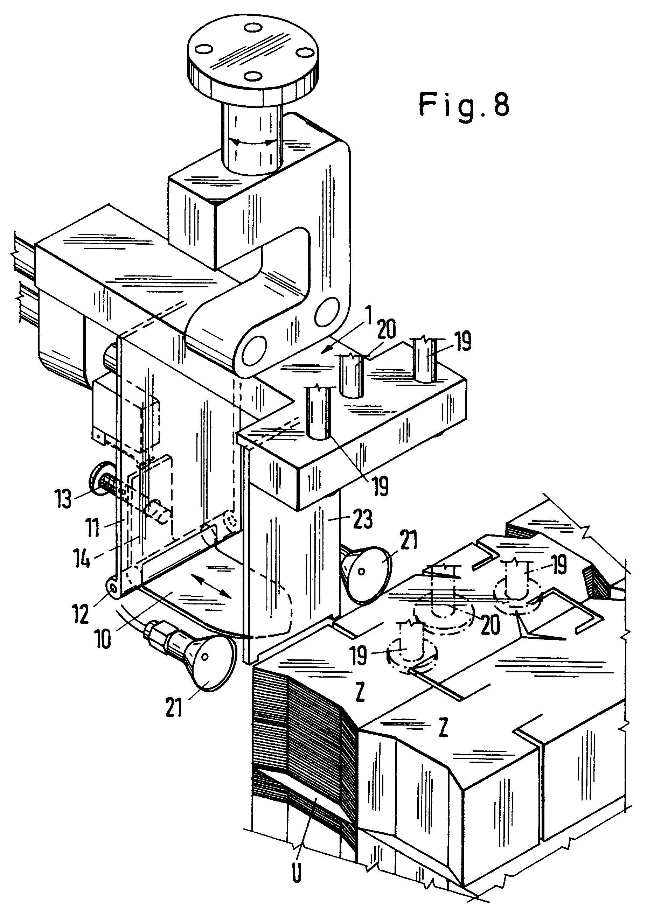

Da es zweckmäßig oder notwendig sein kann, den jeweils ersten Zuschnittsblock Z jeder der auf der Palette P befindlichen Lagen von einer Seite her abzunehmen, an der es keinen Überstand der Unterlage U gegenüber der senkrechten Einstechseite des Zuschnittsblocks Z gibt, kann bei einer alternativen Ausführungsform nach Fig.8 der Greifkopf 1 seitlich neben dem Einstechwerkzeug 9 mit mindestens einem Sauger 21 versehen sein. Mit Hilfe dieser Sauger 21 wird der jeweils am Außenrand des Gesamtstapels auf der Palette P angeordnete Zuschnittsblock Z gegenüber seiner Unterlage U separiert, nämlich vorgezogen, so daß anschließend das Einstechwerkzeug 9, beispeilsweise in Form einer Platte 10, unter den jeweils untersten Abschnitt des jeweiligen Zuschnittsblocks Z eingefahren werden kann, worauf anschließend der jeweilige Zuschnittsblock Z abgehoben und abtransportiert wird. Zur Ausrichtung eines gegebenenfalls verrutschten Zuschnittsblocks Z kann zwischen den Saugern 21 eine Platte 23 angeordnet sein, die vor dem Saugvorgang gegen die Zuschnitte gefahren wird und diese ausrichtet.

Wie aus dem in Fig.8 dargestellten Ausführungsbeispiel hervorgeht, können diese Sauger 21 zusätzlich zu den voranstehend beschriebenen Konstruktionselementen am Greifkopf 1 angeordnet sein, so daß die beiden voranstehend beschriebenen Verfahren der Entstapelung alternativ mit der bereits erläuterten Vorrichtung durchgeführt werden können. Die Fig.8 zeigt, daß auch bei dieser abgewandelten Konstruktion der Greifkopf 1 mit in diesem Fall paarweise angeordneten Druckstempeln 19 und einem Haltestempel 20 versehen sein kann, um einerseits ein unerwünschtes Verrutschen des Zuschnittsblockes Z beim Vorziehen mittels der Sauger 21 und der Greifkopfbewegung und beim Einschieben der Platte 10 zu verhindern und andererseits ein zuverlässiges Festhalten des separierten Zuschnittsblocks Z auf dem Einstechwerkzeug 9 sicherzustellen. Die Sauger 21 werden aus ihrer in Fig.8 dargestellten Arbeitsstellung herausbewegt, wenn der Greifkopf in der zuvor beschriebenen Weise arbeitet.

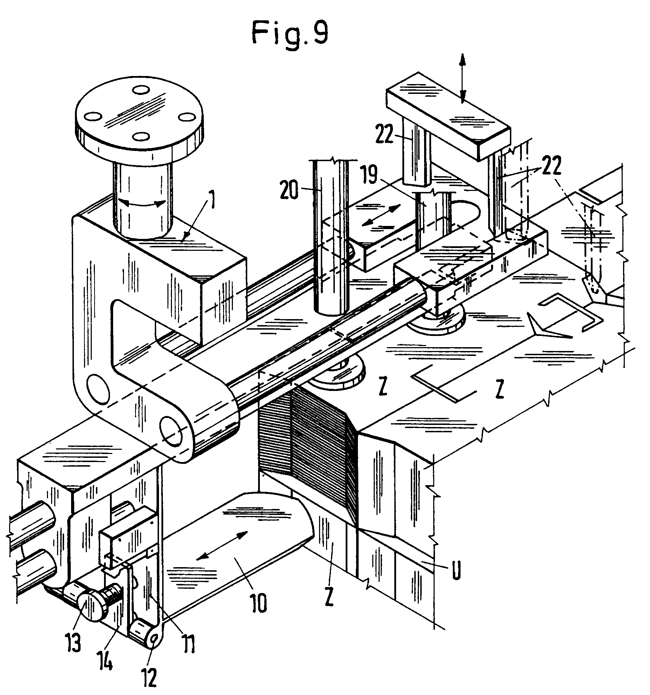

Eine alternative Ausführungsform zu der in Fig.8 dargestellten Konstruktion zeigt Fig.9. Hier sind anstelle der Sauger 21 am Greifkopf 1 Einstechfinger 22 angeordnet, die relativ zum Einstechwerkzeug 9 in senkrechter Richtung verfahrbar sind. Diese Einstechfinger 22 können von oben her in Lücken eingeführt werden, die entweder im eigentlichen Zuschnittsblock Z entsprechend der Ausbildung der Zuschnitte ausgebildet sind oder sich zwischen benachbarten Zuschnittsblocks Z ergeben. In Fig.9 sind die Einstechfinger 22 in strichpunktierter Darstellung gezeigt, bevor sie in entsprechende Lücken zwischen benachbarten Zuschnittsblocks Z eingeführt werden. Anschließend werden die Einstechfinger 22 in waagerechter Richtung mit dem bzw. relativ zum Greifkopf 1 verschoben, so daß der am Rand der Palette P angeordnete Zuschnittsblock Z gegenüber der Unterlage U vorgezogen wird. Nunmehr kann von unten her die Platte 10 des Einstechwerkzeuges 9 unter den jeweils untersten Zuschnitt des geringfügig vorgezogenen Zuschnittsblockes Z geführt werden, um diesen zu ergreifen, zu vereinzeln und abzutransportieren. Auch in diesem Fall sind Druck- und Haltestempel 19 bzw. 20 angeordnet, um den Vereinzelungs- und Abtransportsvorgang zu unterstützen.

### Bezugszeichenliste:

- P: Palette
- U: Unterlage
- Z: Zuschnittsblock
- 1: Greifkopf
- 2: Führungsstange
- 3: Lauwagen
- 4: Tragbalken
- 5: Schlitten
- 6: Joch
- 7: Portal
- 8: Förderband
- 9: Einstechwerkzeug
- 10: Platte
- 10a: Spitze
- 10b: Auflagefläche
- 10c: Platte
- 11: Tragplatte
- 12: Lagerbolzen
- 13: Schraube
- 14: Schalthebel
- 15: Zugfeder
- 16a: Näherungsschalter
- 16b: Näherungsschalter
- 17: Hubmagnet
- 18: Druckluftkanal
- 19: Druckstempel
- 20: Haltestempel
- 21: Sauger
- 22: Einstechfinger
- 23: Platte

## Patentansprüche

1. Verfahren zum Entstapeln von blockweise auf Paletten (P) gestapelten Zuschnitten aus Papier, Pappe, Karton, Kunststoff oder dgl., die anschließend als Zuschnittsblocks (Z) einer Weiterverarbeitung oder Zwischenlagerung zugeführt werden, wobei die einzelnen Zuschnittsblocks (Z) einzeln und nacheinander mittels eines Einstechwerkzeuges (9) von ihrer jeweiligen Unterlage (U) mindestens geringfügig angehoben werden und anschließend der jeweilige Zuschnittsblock (Z) abgehoben und abtransportiert wird, bevor das Einstechwerkzeug (9) dem nächsten Zuschnittsblock (Z) zugeführt wird, und wobei sich die in einer waagerechten Ebene mindestens grob positionierte Spitze (10a) des Einstechwerkzeuges (9) unmittelbar vor dem Einstechvorgang zwecks exakter Positionierung in senkrechter Richtung auf einer gegenüber der senkrechten Einstechseite des Zuschnittsblocks (Z) vorstehenden Unterlage (U) abstützt, die durch eine die übereinanderliegenden Zuschnittsblocks (Z) voneinander trennende Zwischenlage (U) gebildet wird, bevor das Einstechwerkzeug (9) eingefahren wird.

2. Verfahren nach Anspruch 1, dadurch gekennzeichnet, daß ein am Außenrand des Gesamtstapels auf der Palette (P) angeordneter Zuschnittsblock (Z) durch Saugkraft gegenüber der Zwischenlage (U) separiert wird und daß anschließend ein Einstechwerkzeug (9) unter den jeweils untersten Zuschnitt des jeweiligen Zuschnittsblocks (Z) engefahren wird, durch das anschließend der jeweilige Zuschnittsblock (Z) abgehoben und abtransportiert wird.

3. Verfahren nach Anspruch 1, dadurch gekennzeichnet, daß ein am Außenrand des Gesamtstapels auf der Palette (P) angeordneter Zuschnittsblock (Z) durch von oben in Lücken entweder des Zuschnittsblocks (Z) oder zwischen benachbarten Zuschnittsblöcken (Z) eingeführte Einstechfinger (22) gegenüber der Zwischenlage (U) verschoben wird und daß anschließend ein Einstechwerkzeug (9) unter den jeweils untersten Zuschnitt des jeweiligen Zuschnittsblocks (Z) eingefahren wird, durch das anschließend der jeweilige Zuschnittsblock (Z) abgehoben und abtransportiert wird.

4. Verfahren nach Anspruch 1, 2 oder 3, dadurch gekennzeichnet, daß vor dem Einstechen des Einstechwerkzeuges (9) der jeweilige Zuschnittsblock (Z) durch Aufbringen einer Druckkraft in einem von der Einstechseite entfernten Bereich belastet wird.

5. Verfahren nach Anspruch 1, dadurch gekennzeichnet, daß die exakte Positionierung des Einstechwerkzeuges (9) in senkrechter Richtung durch Auflage der Spitze (10a) des Einstechwerkzeuges (9) auf der jeweiligen Zwischenlage (U) und durch eine hierdurch erzeugte geringfügige Relativbewegung der Spitze (10a) gegenüber der senkrechten Anstellbewegung des gesamten Einstechwerkzeuges (9) erfolgt.

6. Verfahren nach Anspruch 5, dadurch gekennzeichnet, daß die die senkrechte Anstellbewegung des Einstechwerkzeuges (9) beendende Auflagekraft der Spitze (10a) des Einstechwerkzeuges (9) auf der jeweiligen Zwischenlage (U) in Abhängigkeit von der Beschaffenheit der Zwischenlage (U) veränderlich ist.

7. Verfahren nach mindestens einem der Ansprüche 1 bis 6, dadurch gekennzeichnet, daß der Abtransport des jeweiligen Zuschnittsblocks (Z) durch das Einstechwerkzeug (9) erfolgt und daß während dieses Abtransports der Zuschnittsblock (Z) durch eine Haltekraft gegen Verrutschen auf dem Einstechwerkzeug (9) gesichert wird.

8. Verfahren nach mindestens einem der Ansprüche 1 bis 7, dadurch gekennzeichnet, daß die einzelnen Zuschnittblöcke (Z) vom Einstechwerkzeug (9) auf einem als Zwischenspeicher ausgebildeten Förderband (8) abgelegt werden.

9. Vorrichtung zum Entstapeln von blockweise auf Paletten (P) gestapelten Zuschnitten aus Papier, Pappe, Karton, Kunststoff oder dgl., die anschließend als Zuschnittsblock (Z) einer Weiterverarbeitung oder Zwischenlagerung zugeführt werden, mit einem räumlich gesteuert verfahrbaren Greifkopf (1), an dem ein etwa waagerecht ausgerichtetes Einstechwerkzeug (9) gelagert ist,
**dadurch gekennzeichnet**,
daß das Einstechwerkzeug (9) um eine waagerechte Achse (12) geringfügig verschwenkbar gelagert ist, wobei die Verschwenkbewegung des Einstechwerkzeuges (9) in Absenkrichtung durch einen Anschlag (13) begrenzt ist und die Verschwenkbewegung des Einstechwerkzeuges (9) in Gegenrichtung durch einen Schalthebel (14) überwacht wird, der mittels eines Schalters (16a, 16b) die Absenkbewegung des Greifkopfes (1) unterbricht, sobald das Einstechwerkzeug (9) entgegen einer einstellbaren Federkraft um einen, vorgebbaren Winkel verschwenkt worden ist.

10. Vorrichtung nach Anspruch 9, dadurch gekennzeichnet, daß die auf das Einstechwerkzeug (9) entgegensetzt zur Absenkrichtung ausgeübte Federkraft mittels eines Verstellgliedes (17), beispielsweise eines Hubmagneten oder Druckmittelzylinders, verstellbar ist.

11. Vorrichtung nach Anspruch 9, dadurch gekennzeichnet, daß am, Greifkopf (1) außerhalb des Bewegungsbereiches des Einstechwerkzeuges (9) ein verfahrbarer Druckstempel (19) angeordnet ist.

12. Vorrichtung nach den Ansprüchen 9 und 11, dadurch gekennzeichnet, daß am Greifkopf (1) innerhalb des Bewegungsbereiches des Einstechwerkzeuges (9) ein verfahrbarer Haltestempel (20) angeordnet ist.

13. Vorrichtung nach mindestens einem der Ansprüche 9 bis 12, dadurch gekennzeichnet, daß das Einstechwerkzeug (9) an einer Tragplatte (11) angeordnet ist, die in waagerechter Richtung verfahrbar am Greifkopf (1) gelagert ist.

14. Vorrichtung nach mindestens einem der Ansprüche 9 bis 13, dadurch gekennzeichnet, daß das Einstechwerkzeug (9) als zungenartige Platte (10) mit einer mittigen Spitze (10a) ausgebildet ist.

15. Vorrichtung nach mindestens einem der Ansprüche 9 bis 13, dadurch gekennzeichnet, daß das Einstechwerkzeug (9) als gegabelte Platte (10c) mit zwei oder mehr Spitzen (10a) ausgebildet ist.

16. Vorrichtung nach Anspruch 14 oder 15, dadurch gekennzeichnet, daß die Spitze (10a) gegenüber der waagerechten Platte (10) leicht nach unten gebogen und jeweils mit einer definierten Auflagefläche (10b) ausgebildet ist.

17. Vorrichtung nach Anspruch 9, dadurch gekennzeichnet, daß am Greifkopf (1) seitlich neben dem Einstechwerkzeug (9) mindestens ein Sauger (21) angeordnet ist.

18. Vorrichtung nach Anspruch 9, dadurch gekennzeichnet, daß am Greifkopf (1) seitlich neben dem Einstechwerkzeug (9) Einstechfinger (22) angeordnet sind, die relativ zum Einstechwerkzeug (9) in senkrechter Richtung verfahrbar sind.

19. Vorrichtung nach mindestens einem der Ansprüche 9 bis 18, dadurch gekennzeichnet, daß das Einstechwerkzeug (9) mit mindestens einem, an seiner Vorderkante mündenden Druckluftkanal (18) versehen ist.

## Claims

1. Process for destacking blanks made from paper, board, card, plastic or the like, which have been stacked in blocks on pallets (P) and which are then fed as blank blocks (Z) to further processing or intermediate storage, the individual blank blocks (Z) being raised individually and successively, by means of an insertion tool (9), at least slightly from their respective support (U) and the respective blank block (Z) then being lifted off and transported away before the insertion tool (9) is fed to the next blank block (Z), and the tip (10a) of the insertion tool (9), which tip is positioned at least roughly in a horizontal plane, being supported directly prior to the insertion procedure on a support (U), which projects in relation to the vertical insertion side of the blank block (Z) and is formed by an intermediate base (U) separating the blank blocks (Z) lying one on top of another, for the purpose of exact positioning in the vertical direction, before the insertion tool (9) is driven in.

2. Process according to Claim 1, characterised in that a blank block (Z) disposed on the outer margin of the total stack on the pallet (P) is separated by suction force in relation to the intermediate base (U) and in that an insertion tool (9) is then driven in beneath the, in each case, lowermost blank of the respective blank block (Z), by means of which tool the respective blank block (Z) is then lifted off and transported away.

3. Process according to Claim 1, characterised in that a blank block (Z) disposed on the outer margin of the total stack on the pallet (P) is displaced in relation to the intermediate base (U) by insertion fingers (22) introduced from above into gaps either in the blank block (Z) or between adjacent blank blocks (Z) and in that an insertion tool (9) is then driven in beneath the, in each case, lowermost blank of the respective blank block (Z), by means of which tool the respective blank block (Z) is then lifted off and transported away.

4. Process according to Claim 1, 2 or 3, characterised in that, prior to the insertion of the insertion tool (9), the respective blank block (Z) is placed under stress, in an area remote from the insertion side, by the application of a compression force.

5. Process according to Claim 1, characterised in that the exact positioning of the insertion tool (9) in the vertical direction is effected by the tip (10a) of the insertion tool (9) being laid on the respective intermediate base (U) and by a resulting slight relative motion of the tip (10a) in relation to the vertical approach motion of the total insertion tool (9).

6. Process according to Claim 5, characterised in that the bearing force of the tip (10a) of the insertion tool (9) on the respective intermediate base (U), which bearing force terminates the vertical approach motion of the insertion tool (9), is variable in dependence upon the nature of the intermediate base (U).

7. Process according to at least one of Claims 1 to 6, characterised in that the respective blank block (Z) is transported away by the insertion tool (9) and in that, during this transportation, the blank block (Z) is secured by a holding force against slippage on the insertion tool (9).

8. Process according to at least one of Claims 1 to 7, characterised in that the individual blank blocks (Z) are deposited by the insertion tool (9) on a conveyor belt (8) configured as an intermediate store.

9. Device for destacking blanks made from paper, board, card, plastic or the like, which have been stacked in blocks on pallets (P) and which are then fed as a blank block (Z) to further processing or intermediate storage, having a grab head (1) which can be displaced in a spatially controlled manner and on which there is mounted an approximately horizontally aligned insertion tool (9), characterised in that the insertion tool (9) is mounted so as to be slightly pivotable about a horizontal axis (12), the pivotal motion of the insertion tool (9) in the lowering direction being limited by a stop (13) and the pivotal motion of the insertion tool (9) in the counter direction being monitored by a switch lever (14), which, by means of a switch (16a, 16b), interrupts the lowering movement of the grab head (1) as soon as the insertion tool (9) has been pivoted, counter to an adjustable spring force, about a pre-definable angle.

10. Device according to Claim 9, characterised in that the spring force exerted upon the insertion tool (9) counter to the direction of lowering can be adjusted by means of an adjusting member (17), for example by means of a lifting magnet or a pressure-medium cylinder.

11. Device according to Claim 9, characterised in that on the grab head (1), outside the range of motion of the insertion tool (9), there is disposed a displaceable pressure stamp (19).

12. Device according to Claims 9 and 11, characterised in that on the grab head (1), within the range of motion of the insertion tool (9), there is disposed a displaceable holding stamp (20).

13. Device according to at least one of Claims 9 to 12, characterised in that the insertion tool (9) is disposed on a bearing plate (11), which is mounted on the grab head (1) so as to be displaceable in the horizontal direction.

14. Device according to at least one of Claims 9 to 13, characterised in that the insertion tool (9) is configured as a tongue-like plate (10) having a central tip (10a).

15. Device according to at least one of Claims 9 to 13, characterised in that the insertion tool (9) is configured as a forked plate (10c) having two or more tips (10a).

16. Device according to Claim 14 or 15, characterised in that the tip (10a) is bent slightly downwards in relation to the horizontal plate (10) and is configured, in each case, having a defined bearing surface (10b).

17. Device according to Claim 9, characterised in that on the grab head (1), laterally alongside the insertion tool (9), there is disposed at least one suction element (21).

18. Device according to Claim 9, characterised in that on the grab head (1), laterally alongside the insertion tool (9), there are disposed insertion fingers (22), which are displaceable relative to the insertion tool (9) in the vertical direction.

19. Device according to at least one of Claims 9 to 18, characterised in that the insertion tool (9) is provided with at least one compressed-air passage (18) which opens out on its front edge.

## Revendications

1. Procédé pour le désempilage de feuilles découpées en papier, papier-carton, carton, matière plastique ou analogue, qui sont empilées par blocs sur des palettes (P), et qui sont ensuite amenées sous forme de blocs (Z) de feuilles découpées, à une transformation ultérieure ou à un stockage intermédiaire, dans lequel les blocs individuels (Z) de feuilles découpées sont individuellement et successivement soulevés, au moins très légèrement, de leur base de support (U)respective, au moyen d'un outil de plongée (9), et le bloc (Z) de feuilles découpées considéré est ensuite levé et évacué avant que l'outil de plongée (9) ne soit amené au bloc (Z) de feuilles découpées suivant, et dans lequel la pointe (10a) de l'outil de plongée (9) positionnée au moins de manière grossière dans un plan horizontal, juste avant l'opération de plongée et en vue d'un positionnement exact dans la direction verticale, s'appuie sur une base de support (U) en saillie par rapport à la surface de plongée verticale du bloc (Z) de feuilles découpées, cette base de support (U) étant constituée par une couche intercalaire (U) séparant l'un de l'autre les blocs (Z) de feuilles découpées superposés, avant que ne soit effectuée la pénétration de l'outil de plongée (9).

2. Procédé selon la revendication 1, caractérisé en ce qu'un bloc (Z) de feuilles découpées disposé sur le bord extérieur de l'ensemble de la pile sur la palette (P), est séparé de la couche intercalaire (U) par une force d'aspiration, et en ce qu'ensuite, sous la feuille découpée respectivement inférieure du bloc (Z) de feuilles découpées considéré, est introduit un outil de plongée (9) par lequel le bloc (Z) de feuilles découpées considéré est alors levé et évacué,

3. Procédé selon la revendication 1, caractérisé en ce qu'un bloc (Z) de feuilles découpées disposé sur le bord extérieur de l'ensemble de la pile sur la palette (P) est déplacé par rapport à la couche intercalaire (U) par des doigts de plongée (22) s'engageant par le haut dans des interstices vides, soit du bloc (Z) de feuilles découpées, soit entre des blocs (Z) voisins de feuilles découpées, et en ce qu'ensuite, sous la feuille découpée respectivement inférieure du bloc (Z) de feuilles découpées considéré, est introduit un outil de plongée (9) par lequel le bloc (Z) de feuilles découpées considéré est alors levé et évacué.

4. Procédé selon la revendication 1, 2 ou 3, caractérisé en ce qu'avant la plongée de l'outil de plongée (9), le bloc (Z) de feuilles découpées est sollicité par l'application d'une force de compression dans une zone éloignée du côté de la plongée.

5. Procédé selon la revendication 1, caractérisé en ce que le positionnement exact de l'outil de plongée (9) en direction verticale, est effectué par l'appui de la pointe (10a) de l'outil de plongée (9) sur la couche intercalaire (U) respective, et par un très léger mouvement relatif ainsi engendré, de la pointe (10a) par rapport au mouvement vertical de mise en place de l'ensemble de l'outil de plongée (9).

6. Procédé selon la revendication 5, caractérisé en ce que la force d'appui sur la couche intercalaire considérée (U), de la pointe (10a) de l'outil de plongée (9), achevant le mouvement vertical de mise en place de l'outil de plongée (9) peut être modifiée en fonction de la nature de la couche intercalaire (U).

7. Procédé selon l'une au moins des revendications 1 à 6, caractérisé en ce que l'évacuation du bloc (Z) de feuilles découpées considéré, s'effectue au moyen de l'outil de plongée (9), et en ce qu'au cours de ce transport d'évacuation, le bloc (Z) de feuilles découpées est assuré contre un glissement sur l'outil de plongée (9), par une force de maintien.

8. Procédé selon l'une au moins des revendications 1 à 7, caractérisé en ce que les blocs individuels (Z) de feuilles découpées sont déposés par l'outil de plongée (9), sur une bande transporteuse (8) formant stockage intermédiaire.

9. Dispositif pour le désempilage de feuilles découpées en papier, papier-carton, carton, matière plastique ou analogue, qui sont empilées par blocs sur des palettes (P), et qui sont ensuite amenés sous forme de blocs (Z) de feuilles découpées, à une transformation ultérieure ou à un stockage intermédiaire, le dispositif comportant une tête de préhension (1) pouvant se déplacer en étant commandée dans l'espace, et sur laquelle est monté un outil de plongée (9) d'orientation sensiblement horizontale, caractérisé en ce que l'outil de plongée (9) est monté de manière à pouvoir pivoter très légèrement autour d'un axe horizontal (12), le mouvement de pivotement de l'outil de plongée (9) étant limité dans la direction de l'abaissement par une butée (13), et le mouvement de pivotement de l'outil de plongée (9) est contrôlé dans la direction opposée, par un levier de commande (14), qui par l'intermédiaire d'un commutateur (16a, 16b), interrompt le mouvement d'abaissement de la tête de préhension (1), dès que l'outil de plongée (9) a été pivoté à l'encontre d'une force élastique réglable, d'un angle pouvant être prédéfini.

10. Dispositif selon la revendication 9, caractérisé en ce que le force élastique agissant sur l'outil de plongée (9) à l'encontre de la direction d'abaissement, peut être réglée au moyen d'un organe de réglage (17), par exemple un aimant de levée ou un vérin à fluide de pression.

11. Dispositif selon la revendication 9, caractérisé en ce que sur la tête de préhension (1), en-dehors de la zone de mouvement de l'outil de plongée (9) est disposé un poussoir de compression (19) déplaçable.

12. Dispositif selon les revendications 9 et 11, caractérisé en ce que sur la tête de préhension (1), dans la zone de mouvement de l'outil de plongée (9) est disposé un poussoir de maintien (20) déplaçable.

13. Dispositif selon l'une au moins des revendications 9 à 12, caractérisé en ce que l'outil de plongée (9) est disposé sur une plaque de support (11), qui est montée sur la tête de préhension (1) en pouvant coulisser dans la direction horizontale.

14. Dispositif selon l'une au moins des revendications 9 à 13, caractérisé en ce que l'outil de plongée (9) est réalisé en tant que plaque (10) en forme de langue, comportant une pointe centrale (10a).

15. Dispositif selon l'une au moins des revendications 9 à 13, caractérisé en ce que l'outil de plongée (9) est réalisé en tant que plaque (10c) en forme de fourche, comportant deux ou plusieurs pointes (10a).

16. Dispositif selon la revendication 14 ou 15, caractérisé en ce que la pointe (10a) est légèrement cintrée vers le bas par rapport à la plaque (10) horizontale et comporte une surface d'appui (10b) bien définie.

17. Dispositif selon la revendication 9, caractérisé en ce que sur la tête de préhension (1), latéralement à côté de l'outil de plongée (9), est disposé au moins un aspirateur (21).

18. Dispositif selon la revendication 9, caractérisé en ce que sur la tête de préhension (1), latéralement à côté de l'outil de plongée (9), sont disposés des doigts de plongée (22), qui peuvent se déplacer par rapport à l'outil de plongée (9), dans la direction verticale.

19. Dispositif selon l'une au moins des revendications 9 à 18, caractérisé en ce que l'outil de plongée (9) est pourvu d'au moins un canal d'air comprimé (18) débouchant sur son bord avant.
